# EUROPÄISCHE PATENTSCHRIFT

(11) **EP 1 190 186 B1**
(45) Veröffentlichungstag und Bekanntmachung des Hinweises auf die Patenterteilung: **05.11.2003**
(21) Anmeldenummer: 00938738.2
(22) Anmeldetag: 02.06.2000
(51) Int. Cl.: F16G 13/06

(54) **KETTE**
CHAIN
CHAINE

(30) Priorität: 04.06.1999 DE 29910372 U
(43) Veröffentlichungstag der Anmeldung: 27.03.2002
(73) Patentinhaber: Arnold & Stolzenberg GmbH, 37557 Einbeck (DE)
(72) Erfinder: VOGT, Erhard, D-37574 Einbeck (DE)
(74) Vertreter: Pfenning, Meinig & Partner GbR
(86) Internationale Anmeldenummer: EP0005083
(87) Internationale Veröffentlichungsnummer: WO00075529

(56) Entgegenhaltungen:
- EP-A- 0 257 661
- DE-U- 1 966 980
- DE-U- 29 910 372
- US-A- 5 857 318

## Beschreibung

Die Erfindung betrifft eine Kette nach dem Oberbegriff des Anspruchs 1.

Bei der Nachschmierung von derartigen Ketten wird das Schmiermittel z.B. durch Tropfschmierung von außen auf die Kette aufgebracht. Aufgrund des Spiels zwischen den Innen- und Außenlaschen kann das Schmiermittel auch durch den Spalt zwischen diesen und von dort in den Spalt zwischen dem Bolzen und der Buchse dringen. Im Betrieb stellt sich jedoch das Spiel zwischen Innen- und Außenlasche an einigen Gelenken einseitig ein und verändert sich auch während des Kettenumlaufs nicht. Dies führt dazu, daß der Schmiermittelfluß in diesen Gelenken nicht optimal ist, so daß Reibrost, erhöhter Verschleiß und vorzeitiger Ausfall eines betroffenen Gelenks auftreten können.

Aus dem DE-GM 1 966 980 ist eine Stahllaschenkette bekannt, bei der die Außenlaschen mit Bolzen in die Innenlaschen fest eingepreßten Buchsen drehbar gelagert sind. In dem Abstand zwischen Innen- und Außenlaschen ist jeweils eine flexible Dichtung vorgesehen, durch die ein innerhalb des Abstandes gelegener Ringraum zur Aufnahme von Schmiermittel gebildet und zusammen mit dem sich hieran anschließenden, zwischen Gelenkbolzen und Buchse vorhandenen Ringspalt nach außen hin abgedichtet ist. Diese Kette hat jedoch den Nachteil, daß die vorzugsweise aus Kunststoff bestehende Dichtung einem relativ hohen Verschleiß unterworfen ist und auch eine Nachschmierung nicht möglich ist.

Weiterhin ist in der EP 0 257 661 B1 eine mit Schmieröl beaufschlagbare Rollenkette offenbart, bei der die Außen- und Innenlaschen über aus Bolzen und Hülsen bestehende, von Rollen umgebene Gelenke miteinander verbunden sind. Es sind ein in Umfangsrichtung der Rolle begrenzter Spalt zwischen wenigstens einer Stirnseite der Rolle und der benachbarten Innenlasche und wenigstens eine auf den Spalt ausgerichtete radiale Ölzuführöffnung in jeder Hülse vorgesehen. Um auch unter ungünstigen Betriebsbedingungen eine ausreichende Schmierung der Gelenke sicherzustellen, ist der durch wenigstens ein zwischen der Stirnseite der Rolle und der Innenlasche vorgesehene Distanzelement gebildete Spalt in seiner Gesamtlänge in Umfangsrichtung länger als die Umfangserstreckung des Distanzelements bzw. der Distanzelemente. Hierdurch ist gewährleistet, daß aufgrund der Relativbewegungen zwischen der Rolle und der Innenlasche immer wieder der direkte Zugang zur Ölzuführöffnung der Hülse freigegeben wird und somit das Schmieröl in den Spalt zwischen Bolzen und Hülse einbringen kann. Diese Kette ist jedoch relativ aufwendig in der Herstellung.

Schließlich ist aus der US-A-5 857 318 eine Glieder-Kette bekannt mit Kettengliedern mit jeweils zwei zueinander parallelen Innenlaschen und zwei fest zwischen den Innenlaschen angeordneten, jeweils zwei Enden von diesen miteinander verbindenden Buchsen und aus die Kettenglieder in der Weise verbindenden Außenlaschen, daß jeweils zwei zueinander parallele Außenlaschen die einander zugewandten Enden zweier benachbarter Kettenglieder gelenkig miteinander verbinden, indem an jedem dieser einander zugewandten Enden jeweils zwei Enden von zwei zwei Kettenglieder verbindenden Außenlaschen jeweils mit einem Ende eines durch eine der Buchsen geführten, drehbar in dieser gelagerten Bolzen fest verbunden sind, wobei die Buchsen an ihren beiden Enden über die der jeweiligen Außenlasche zugewandten Außenseiten der Innenlaschen hinaustreten und der so gebildete Überstand mindestens einen sich von dem Außendurchmesser zum Innendurchmesser der Buchse erstreckenden nutenförmigen Schmiermitteldurchgang aufweist.

Es ist die Aufgabe der vorliegenden Erfindung, eine Kette zu schaffen, die eine ausreichende und dosierte Schmierung zwischen ihren gegeneinander bewegbaren Teile sicherstellt und die einfach in der Herstellung ist.

Diese Aufgabe wird erfindungsgemäß gelöst durch die im kennzeichnenden Teil des Anspruchs 1 angegebenen Merkmale. Vorteilhafte Weiterbildungen der erfindungsgemäßen Kette ergeben sich aus den Unteransprüchen.

Die Erfindung wird im Folgenden anhand eines in den Figuren darstellten Ausführungsbeispiels näher erläutert. Es zeigen:

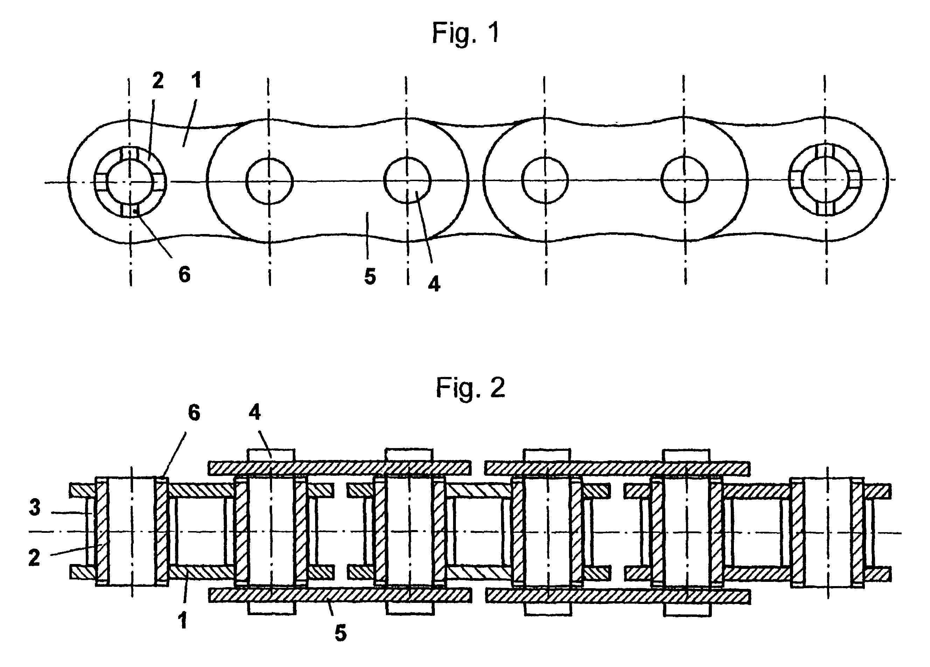

- Fig. 1: einen Abschnitte einer Kette in der Seitenansicht, und
- Fig. 2: den in Fig. 1 dargestellten Kettenabschnitt im horizontalen Längsschnitt.

Die gezeigte Kette weist pro Kettenglied zwei Innenlaschen 1 auf, die jeweils an ihren beiden Enden kreisförmige Öffnungen enthalten. In jeweils eine Öffnung zweier Innenlaschen 1 ist jeweils ein Ende einer Buchse 2 drehfest eingepreßt, so daß die Innenlaschen 1 eines Kettengliedes durch zwei Buchsen 2 in vorbestimmtem Abstand parallel zueinander gehalten werden. Auf jeder Buchse 2 ist zwischen den Innenlaschen 1 eine Rolle 3 drehbar angeordnet. In den Buchsen 2 sind Bolzen 4 drehbar gelagert, deren Enden aus den Buchsen 2 herausragen. Die Bolzen 4 tragen Außenlaschen 5, die ebenfalls an ihren beiden Enden kreisförmige Öffnungen aufweisen, in die jeweils ein Ende eines Bolzens drehfest eingepreßt ist. Die beiden einander zugewandten Enden eines von zwei Innenlaschen 1, zwei Buchsen 2 und zwei Rollen 3 gebildeten Kettengliedes werden somit durch zwei parallele Außenlaschen 5 gelenkig miteinander verbunden.

Damit sichergestellt ist, daß der Ringspalt zwischen dem Bolzen 4 und der gegenüber dieser verschwenkbaren Buchse 2 ausreichend mit Schmiermittel versorgt wird, steht die Buchse 2 auf beiden Seiten über die Außenfläche der Innenlaschen 1 hinaus, so daß, wenn aufgrund der Verschiebbarkeit zwischen Bolzen 4 und Buchse 2 die Innenflächen der Außenlaschen 5 jeweils gegen die zugewandte Stirnfläche der Buchse 2 stoßen, ein dem Überstand des jeweiligen Buchsenendes entsprechender Abstand zwischen den einander zugewandten Flächen der Innen- und Außenlaschen 1 bzw. 5 verbleibt.

Damit von außen zugeführtes Schmiermittel jedoch zwischen die Buchse 2 und den Bolzen 4 gelangen kann, sind die jeweiligen Überstände der Buchsen 2 mit sich vom Außenumfang zum Innenumfang erstreckenden Nuten 6 versehen, durch die das Schmiermittel den Bolzen 4 erreichen und dann in den Spalt zwischen diesen und der Buchse 2 eindringen kann. Die Anzahl und die Ausbildung der Nuten 6 sind vorzugsweise den jeweiligen Gegebenheiten angepaßt, wie beispielsweise dem Schmiermittelbedarf, der Viskosität des Schmiermittels usw.. Im gezeigten Beispiel sind vier radial verlaufende Nuten 6 vorgesehen, die jeweils einen Abstand von 90° aufweisen. Die Nuten 6 sind derart ausgebildet, daß sich ihr Tiefe in radialer Richtung der Buchse 2 ändert.

Die Anzahl der Nuten 6 kann größer oder kleiner als vier sein. Sie können auch unter einem Winkel gegenüber der radialen Richtung verlaufen. Dies kann insoweit vorteilhaft sein, als hierdurch bei einer Bewegung der Kette eine zusätzliche Förderwirkung für das Schmiermittel erzielt werden kann.

Im vorstehenden Ausführungsbeispiel ist die Kette als Rollenkette dargestellt. Die Erfindung ist jedoch nicht hierauf beschränkt, sondern kann auch ohne Verwendung der Rollen 3 beispielsweise als Buchsenkette ausgebildet sein.

## Patentansprüche

1. Kette aus Kettengliedern mit jeweils zwei zueinander parallelen Innenlaschen (1) und zwei fest zwischen den Innenlaschen (1) angeordneten, jeweils zwei Enden von diesen miteinander verbindenden Buchsen (2) und aus die Kettenglieder in der Weise verbindenden Außenlaschen (5), daß jeweils zueinander parallele Außenlaschen (5) die einander zugewandten Enden zweier benachbarter Kettenglieder gelenkig miteinander verbinden, indem an jedem dieser einander zugewandten Enden jeweils zwei Enden von zwei zwei Kettenglieder verbindenden Außenlaschen (5) jeweils mit einem Ende eines durch eine der Buchsen (2) geführten, drehbar in dieser gelagerten Bolzen (4) fest verbunden sind, wobei
die Buchsen (2) an ihren beiden Enden über die der jeweiligen Außenlasche (5) zugewandten Auβenseiten der Innenlaschen (1) hinaustreten und der so gebildete Überstand mindestens einen sich von dem Außendurchmesser zum Innendurchmesser der Buchse (2) erstreckenden nutenförmigen Schmiermitteldurchgang (6) aufweist, **dadurch gekennzeichnet, daß** die Tiefe der Nute (6) sich in radialer Richtung der Buchse (2) ändert.

2. Kette nach einem der Ansprüche 1 bis 4, **dadurch gekennzeichnet, daß** mehrere in gleichen Abständen entlang des Umfangs der Buchse (2) angeordnete Schmiermitteldurchgänge (6) vorgesehen sind.

3. Kette nach Anspruch 1 oder 2, **dadurch gekennzeichnet, daß** der Schmiermitteldurchgang (6) sich in radialer Richtung der Buchse (2) erstreckt.

4. Kette nach Anspruch 1 oder 2, **dadurch gekennzeichnet, daß** der Schmiermitteldurchgang (6) sich unter einem Winkel zur radialen Richtung der Buchse (2) erstreckt.

5. Kette nach einem der Ansprüche 1 bis 4, **dadurch gekennzeichnet, daß** sie in Form einer Rollenkette mit jeweils einer auf jeder Buchse (2) drehbar zwischen den Innenlaschen (1) angeordneten Rolle (3) ausgebildet ist.

6. Kette nach einem der Ansprüche 1 bis 5, **dadurch gekennzeichnet, daß** sie in Form einer Buchsenkette ausgebildet ist.

## Claims

1. Chain composed of chain links with two respective inner members (1) in p arallel relative to each other and two o uter members (5) which are fixed between the inner members (1), and bushes (2) which respectively interconnect two ends thereof and link the chain links in such a manner that respective parallel outer members (5) hingelike link the ends of two adjacent chain links which are facing each other in that at each of the ends facing each other two respective ends of two outer members (5) which link two chain members are firmly connected to a respective end of a pin (4) which is passed through one of the bushes (2) so as to be rotary therein, and
the bushes (2) protrude at their two ends over the outsides of the inner members (1) oriented towards a respective outer member (5), and a thus established protrusion includes at least one notchshaped lubricant channel (6) extending from the outside diameter to the inside diameter of the bush (2), **characterised in that** the depth of the groove (6) changes in radial direction of the bush (2).

2. Chain according to one of Claims 1 to 4, **characterised in that** a plurality of lubricant channels (6) arranged at equal distance along the periphery of the bush (2) are provided.

3. Chain according to Claim 1 or 2, **characterised in that** the lubricant channel (6) extends in the radial direction of the bush (2).

4. Chain according to Claim 1 or 2, **characterised in that** the lubricant channel (6) extends at an angle to the radial direction of the bush (2).

5. Chain according to one of Claims 1 to 4, **characterised in that** it is designed in the form of a roller chain with a respective roller (3) arranged to be rotary on each bush (2) between the inside members (1).

6. Chain according to one of Claims 1 to 5, **characterised in that** it is designed in the form of bush chain.

## Revendications

1. Chaîne composée de maillons de chaîne possédant chacun deux plaquettes intérieures (1) parallèles entre elles et deux plaquettes extérieures (5) disposées rigidement entre les plaquettes intérieures (1), qui réunissent à chaque fois deux extrémités de douilles (2) qui relient ces dernières entre elles et qui relient les maillons de chaîne en ce sens qu'à chaque fois des plaquettes extérieures (5) parallèles entre elles relient les extrémités dirigées l'une vers l'autre de deux maillons de chaîne adjacents de façon articulée par le fait qu'à chacune des ces extrémités dirigées l'une vers l'autre, à chaque fois deux extrémités de deux plaquettes extérieures (5) reliant deux maillons de chaîne sont reliées rigidement chacune à une extrémité d'un axe (4) enfilé à travers une des douilles (2) et monté rotatif dans ce dernier, les douilles (2) débordant à leurs deux extrémités au-delà des côtés extérieurs des plaquettes intérieures (1) qui sont dirigés chacun vers la plaquette extérieure (5) correspondante et la partie débordante ainsi formée présentant au moins un passage de lubrifiant (6) en forme d'encoche qui s'étend du diamètre extérieur au diamètre intérieur de la douille (2), **caractérisée en ce que** la profondeur de l'encoche (6) varie dans la direction radiale de la douille (2).

2. Chaîne selon une des revendications 1 à 4, **caractérisée en ce qu'**il est prévu plusieurs passages de lubrifiant (6) disposés à des espacements égaux le long de la circonférence de la douille (2).

3. Chaîne selon la revendication 1 ou 2, **caractérisée en ce que** le passage de lubrifiant (6) s'étend dans la direction radiale de la douille (2).

4. Chaîne selon la revendication 1 ou 2, **caractérisée en ce que** le passage de lubrifiant (6) s'étend en formant un angle avec la direction radiale de la douille (2).

5. Chaîne selon une des revendications 1 à 4, **caractérisée en ce qu'**elle est réalisée sous la forme d'une chaîne à rouleaux comprenant un rouleau (3) disposé rotatif sur chaque douille (2), entre les plaquettes intérieures (1).

6. Chaîne selon une des revendications 1 à 5, **caractérisée en ce qu'**elle est constituée par une chaîne à douilles.
